# EUROPEAN PATENT APPLICATION

(11) **EP 4 328 469 A1**
(43) Date of publication of application: **28.02.2024**
(21) Application number: 22810455.0
(22) Date of filing: 19.05.2022
(51) Int. Cl.: F16K 1/38, F16K 1/32, F16K 1/46, F16K 15/02, F16K 27/02

(54) **CHECK VALVE**

(30) Priority: 26.05.2021 CN 202121151286 U
(71) Applicant: Zhejiang Dunan Artificial Environment Co., Ltd., Shaoxing Zhejiang 311835 (CN)
(72) Inventor: FENG, Zhongbo, Shaoxing, Zhejiang 311835 (CN); SONG, Zhiguo, Shaoxing, Zhejiang 311835 (CN); WANG, Fugang, Shaoxing, Zhejiang 311835 (CN)
(74) Representative: Viering, Jentschura & Partner mbB Patent- und Rechtsanwälte
(86) International application number: PCT/CN2022/093882
(87) International publication number: WO 2022/247728

(57) **Abstract**

A check valve (100) is provided. The check valve (100) includes a valve body (10) and a piston unit (20). The valve body (10) includes a valve cavity (11) and a valve port (12). The valve body (10) is provided with an inlet (13) and an outlet (14). The valve port (12) is located between the inlet (13) and the valve cavity (11). The outlet (14) is in communication with the valve cavity (110. The piston unit (20) is capable of moving in the valve cavity (11) along an axis of the valve body (10) to open/close the valve port (12). The valve cavity (11) includes a flaring portion (15). Along the axis of the valve body (10), a flow area of a cross section of the flaring portion (15) is greater than a flow area of a cross section of the valve port (12).

## Description

### CROSS-REFERENCE TO RELATED APPLICATIONS

This application claims priority to Chinese patent application No. 202121151286.5, filed on May 26, 2021, and titled "CHECK VALVE". The content of the above identified application is hereby incorporated herein in their entireties by reference.

### TECHNICAL FIELD

The present invention relates to the field of valves, and in particular, to a check valve.

### BACKGROUND

A check valve is a valve that allows a fluid to flow in one direction, inhibits flow in the opposite direction, and can be applied in the pipelines of hydraulic circuits or refrigeration circulatory systems to prevent backflow of the fluid.

The check valve in the related art includes a valve cavity and a piston in the valve cavity. Movement of the piston within the valve cavity toward/away from a valve port often creates a risk of throttling due to expansion of a sealing member, impeding a flow of refrigerant and thus affecting a normal operation of the check valve.

### SUMMARY

According to various embodiments of the present application, a check valve is provided. The check valve includes a valve body and a piston unit. The valve body includes a valve cavity and a valve port. The valve body is provided with an inlet and an outlet. The valve port is located between the inlet and the valve cavity. The outlet is in communication with the valve cavity. The piston unit is capable of moving in the valve cavity along an axis of the valve body to open/close the valve port. The valve cavity includes a flaring portion, and along the axis of the valve body, a flow area of a cross section of the flaring portion is greater than a flow area of a cross section of the valve port.

In some embodiments, the check valve further includes a guiding rod. The guiding rod is fixed in the valve cavity. The piston unit includes a piston rod and a sealing member. One end of the piston rod is matched with the guiding rod, and the other end of the piston rod is arranged towards the valve port. The sealing member is installed on the end of the piston rod towards the valve port. The piston rod is capable of moving along the axis of the valve body by the guiding rod so as to drive the sealing member to open/close the valve port.

In some embodiments, a flow area of a cross section of a portion of the valve cavity adj acent to the valve port and towards the outlet is greater than the flow area of the cross section of the valve port along the axis of the valve body.

In some embodiments, a diameter of the guiding rod is denoted as D, a length of the guiding rod for effectively guiding the piston rod to move is denoted as H, and the diameter D of the guiding rod and the length H of the guiding rod for effectively guiding the piston rod to move satisfy the following relationship: 0.8 D ≤ H ≤ 3D.

In some embodiments, an end of the piston rod adjacent to the inlet is provided with a first stop portion and a second stop portion, a groove is formed between the first stop portion and the second stop portion, and the groove is configured to accommodate the sealing member.

In some embodiments, the first stop portion includes a first peripheral wall portion. The flaring portion includes a second peripheral wall portion. An included angle between an extension line of the first peripheral wall portion and the axis of the valve body is defined as α. An included angle between an extension line of the second peripheral wall portion and the axis of the valve body is defined as β. The included angle α between the extension line of the first peripheral wall portion and the axis of the valve body and the included angle β between the extension line of the second peripheral wall portion and the axis of the valve body satisfy the following relationships: α > β, 0° < α < 90°, and 0° < β < 90°.

In some embodiments, a first guiding hole is formed in the end of the piston rod adjacent to the guiding rod. A second guiding hole is formed in an end of the guiding rod adjacent to the piston rod. The first guiding hole is in communication with the second guiding hole. The check valve further includes a resilient member. Two ends of the resilient member are connected with the piston rod and the guiding rod respectively. The resilient member is located in the first guiding hole and the second guiding hole at the same time. A diameter of the first guiding hole is defined as X. A diameter of the second guiding hole is defined as Y A diameter of the resilient member is defined as Z. The diameter X of the first guiding hole, the diameter Y of the second guiding hole, and the diameter Z of the resilient member satisfy the following relationships: X > Y > Z.

In some embodiments, an end of the guiding rod away from the piston rod is provided with a balance hole, one end of the balance hole is in communication with the second guiding hole, and the other end of the balance hole is in communication with the outlet.

In some embodiments, the piston rod is further provided with a third guiding hole. The third guiding hole is in communication with the first guiding hole. The third guiding hole is located at an end of the first guiding hole away from the guiding rod. A size of the third guiding hole is defined as W. The diameter X of the first guiding hole, the diameter Z of the resilient member, and the size W of the third guiding hole satisfy the following relationship: Z <W<X.

In this way, the third guiding hole plays a guiding role for the resilient member, making the resilient member less prone to deflection during telescoping and stretching movements, and allowing the piston rod to move more smoothly relative to the guiding rod.

In some embodiments, a locating member is further fixedly arranged in the valve cavity and arranged at the end of the guiding rod away from the piston rod. A through hole is formed in the locating member. The guiding rod is inserted into the through hole and fixedly connected with the locating member. Along the axis of the valve body, a flow area of a cross section of the locating member is greater than or equal to the flow area of the cross section of the valve port.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those inventions disclosed herein, reference may be made to one or more attached drawings. Additional details or examples used to describe the drawings should not be considered as limiting the scope of any of the disclosed inventions, currently described embodiments and/or examples, and currently understood best modes of these inventions.
FIG. 1 is a schematic view of a check valve in an opened state according to one or more embodiments.
FIG. 2 is a schematic view of a check valve in a close state according to one or more embodiments.
FIG. 3 is a schematic view of a valve body of a check valve according to one or more embodiments.
FIG. 4 is a schematic view of a piston rod of a check valve according to one or more embodiments.
FIG. 5 is a schematic view of a guiding rod of a check valve according to one or more embodiments.

Reference signs are as follows:
100 represents a check valve; 10 represents a valve body; 11 represents a valve cavity; 12 represents a valve port; 13 represents an inlet; 14 represents an outlet; 15 represents a flaring portion; 151 represents a second peripheral wall portion; 152 represents a flaring port; 153 represents a small diameter end; 20 represents a piston unit; 21 represents a piston rod; 211 represents a first stop portion; 2111 represents a first peripheral wall portion; 212 represents a second stop portion; 213 represents a groove; 214 represents a first guiding hole; 215 represents a third guiding hole; 216 represents a limit step; 22 represents a sealing member; 30 represents a guiding rod; 31 represents a second guiding hole; 32 represents a balance hole; 40 represents a resilient member; 50 represents a locating member; 51 represents a through hole; 52 represents a stopper; and 53 represents a circlip.

### DETAILED DESCRIPTION

The technical scheme in the embodiment of this application will be described clearly and completely with the attached drawings. Obviously, the described embodiment is only a part of the embodiment of this application, not the whole embodiment. Based on the embodiments in this application, all other embodiments obtained by ordinary technicians in this field without creative work belong to the protection scope of this application.

It should be noted that when a component is said to be "mounted" on another component, it can be directly on the other component or there can be a component in the middle. When a component is considered to be "set on" another component, it can be directly set on another component or there may be intervening components at the same time. When a component is considered to be "fixed" to another component, it can be directly fixed to another component or there may be intervening components at the same time.

Unless otherwise defined, all technical and scientific terms used herein have the same meaning as commonly understood by those skilled in the technical field of this application. The terminology used herein in the specification of this application is only for the purpose of describing specific embodiments, and is not intended to limit this application. As used herein, the term "or/and" includes any and all combinations of one or more related listed items.

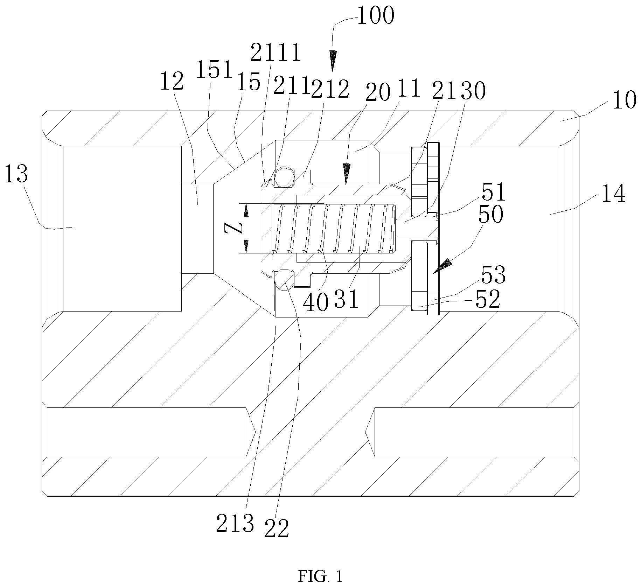

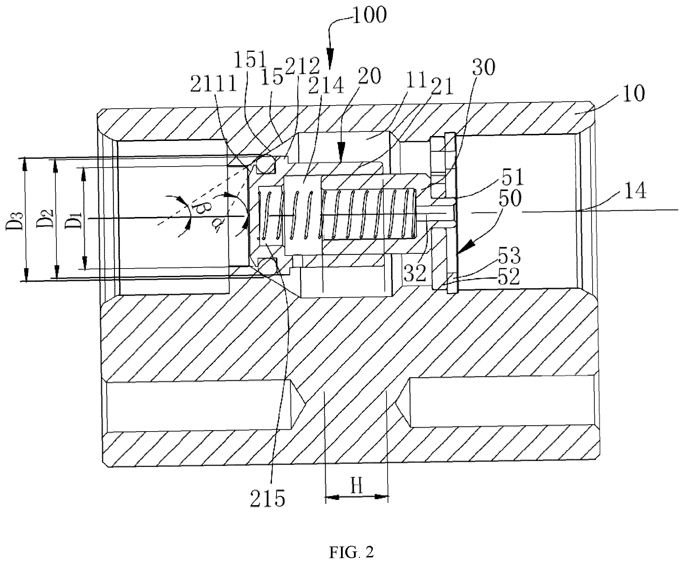

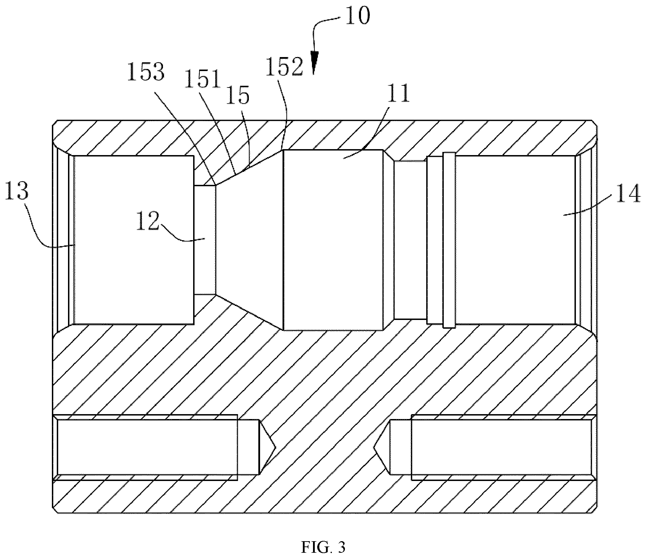

Referring to FIG. 1 to FIG. 5, the present invention provides a check valve 100 which is applied used in an air conditioning unit to prevent backflow of a refrigerant, in hydraulic systems to prevent reverse flow of oil, or in pneumatic systems to prevent a reverse flow of a compressed air.

The check valve 100 includes a valve body 10 and a piston unit 20. The valve body 10 includes a valve cavity 11 and a valve port 12. The valve body 10 is provided with an inlet 13 and an outlet 14. The valve port 12 is located between the inlet 13 and the valve cavity 11. The outlet 14 is in communication with the valve cavity 11. The piston unit 20 is capable of moving in the valve cavity 11 along an axis of the valve body 10 to open/close the valve port 12. The valve cavity 11 includes a flaring portion 15. Along the axis of the valve body 10, a flow area of a cross section of the flaring portion 15 is greater than a flow area of a cross section of the valve port 12.

It is to be noted that in a check valve of the related art, a piston moving towards/away from a valve port in a valve cavity often creates a risk of throttling due to an expansion of a sealing member, which hinders a flow of a refrigerant, thus affecting normal operation of the check valve. However, in the present invention, since a refrigerant flowing through the valve cavity 11 causes a sealing member 22 to expand, thereby causing the piston unit 20 to throttle during its working stroke. By providing the flaring portion 15 within the valve body 10, along the axis of the valve body 10, a flow area of a cross section of the flaring portion 15 is greater than a flow area of a cross section of the valve port 12, thus the check valve 100 in the present invention avoids the risk of throttling and thereby improves a circulation capacity.

Optionally, the valve body 10 as a whole is in a shape of an elongated cylinder and is a hollow structure. In this embodiment, the valve body 10 is made of a cast copper material. In other embodiments, the valve body 10 can also be made of other materials, such as cast iron, which is not limited herein.

As shown in FIGs. 1 to 3, a flow area of a cross section of a portion of the valve cavity 11 adjacent to the valve port 12 and towards the outlet 14 is greater than the flow area of the cross section of the valve port 12 along the axis of the valve body 10, so that there is no risk of throttling the refrigerant when it flows from the valve port 12 to the outlet 14, thereby avoiding obstruction to the circulation and improving a circulation capacity.

An inner wall of the flaring portion 15 can have a conical shape. The flaring portion 15 has a flaring port facing the outlet 14. A small diameter end of the flaring portion 15 is in communication with the valve port 12, so that a flow area gradually increases in the process of the refrigerant flowing from the inlet 13 through the valve port 12 and then through the flaring portion 15 to the outlet 14. The advantage of setting the flaring portion 15 being in a conical shape is that it can make the flow area of the refrigerant have a gradual increase trade, and will not cause the refrigerant to impact too much in the valve cavity 11 to cause damage to the valve body, which in turn affects normal operation of the check valve 100.

Furthermore, the check valve 100 includes a guiding rod 30. The guiding rod 30 is fixed in the valve cavity 11. The piston unit 20 includes a piston rod 21 and a sealing member 22. One end of the piston rod 21 is matched with the guiding rod 30, and the other end of the piston rod 21 is arranged towards the valve port 12. The sealing member 22 is installed on the end of the piston rod 21 towards the valve port 12. The piston rod 21 is capable of moving along the axis of the valve body 10 by the guiding rod 30 to drive the sealing member 22 to open/close the valve port 12.

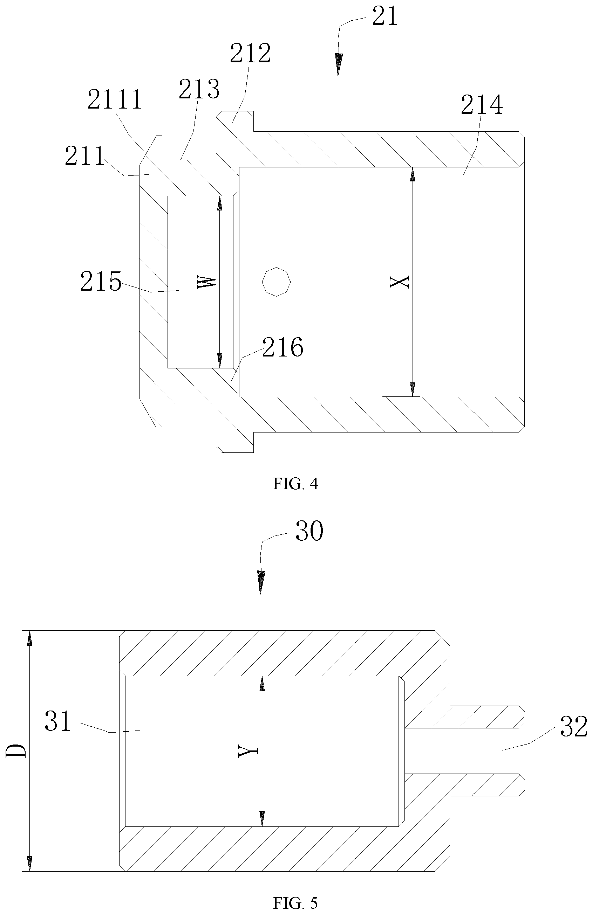

Referring to FIG. 4, a first stop portion 211 and a second stop portion 212 is provided on an end of the piston rod 21 adj acent to the inlet 13. A groove 213 is formed between the first stop portion 211 and the second stop portion 212. The groove 213 is configured to accommodate the sealing member 22. The first stop portion 211 and the second stop portion 212 can provide a back-and-forth stop on the sealing member 22, so that the sealing member 22 is not prone to falling off in different working states of the check valve 100, which helps to improve a service life of the check valve 100 and ensure stable sealing performance.

Optionally, in this embodiment, the sealing member 22 is made of rubber or plastic. In other embodiments, the sealing member 22 may be made of other materials, which is not limited herein.

Furthermore, the first stop portion 211 includes a first peripheral wall portion 2111. The flaring portion 15 includes a second peripheral wall portion 151. An included angle between an extension line of the first peripheral wall portion 2111 and the axis of the valve body 10 is defined as α. An included angle between an extension line of the second peripheral wall portion 151 and the axis of the valve body 10 is defined as β, and the included angle α between the extension line of the first peripheral wall portion 2111 and the axis of the valve body 10 and the included angle β between the extension line of the second peripheral wall portion 151 and the axis of the valve body 10 satisfy the following relationships: α > β, 0° < α < 90°, and 0° < β < 90°. Thereby when the piston rod 21 moves along the axis of the valve body 10 and presses against the valve port 12, the first stop portion 211 and the flaring portion 15 abut against each other to form a line seal, thereby enhancing the sealing performance and reducing the leakage possibility.

The first peripheral wall portion 2111 is in a conical shape. A maximum outer diameter of the first stop portion 211 is defined as D₁. A maximum outer diameter of the second stop portion 212 is defined as D₂. A maximum outer diameter of the sealing member 22 is defined as D₃. The maximum outer diameter D₁ of the first stop portion 211, the maximum outer diameter D₂ of the second stop portion 212 and the maximum outer diameter D₃ of the sealing member 22 satisfy the following relationship: D₃ > D₂ > D₁. Thereby, when the piston rod 21 moves along the axis of the valve body 10 and abuts against the valve port 12, firstly the sealing member 22 and the second stop portion 151 will abut against each other and form a first soft seal. Such as if the pressure difference in the valve cavity 11 continues to increase, the piston rod 21 will be further moved towards the valve port 12, at this time, the first stop portion 211 abuts against the second peripheral wall portion 151, and due to α > β, it makes the first stop portion 211 and the second peripheral wall portion 151 form a second line seal, so that it can achieve a more reliable seal regardless of the pressure value in the valve cavity 11, and improve the sealing performance. As shown in FIGs. 1, 2, and 5, a first guiding hole 214 is formed in the end of the piston rod 21 adjacent to the guiding rod 30. A second guiding hole 31 is formed in an end of the guiding rod 30 adjacent to the piston rod 21. The first guiding hole 214 is in communication with the second guiding hole 31. The check valve 100 further includes a resilient member 40, two ends of the resilient member 40 are connected with the piston rod 21 and the guiding rod 30 respectively, and the resilient member 40 is located in the first guiding hole 214 and the second guiding hole 31 at the same time. A diameter of the first guiding hole 214 is defined as X. A diameter of the second guiding hole 31 is defined as Y A diameter of the resilient member 40 is defined as Z. The diameter X of the first guiding hole 214, the diameter Y of the second guiding hole 31, and the diameter Z of the resilient member 40 satisfy the following relationships: X > Y > Z, so as to make the assembly of the piston rod 21, the guiding rod 30, and the resilient member 40 more convenient and quicker.

Furthermore, as shown in FIG. 4, the piston rod 21 is further provided with a third guiding hole 215. The third guiding hole 215 is in communication with the first guiding hole 214. The third guiding hole 215 is located at an end of the first guiding hole 214 away from the guiding rod 30. A size of the third guiding hole 215 is defined as W, and the diameter X of the first guiding hole 214, the diameter Z of the resilient member 40, and the size W of the third guiding hole 215 satisfy the following relationship: Z < W < X. The third guiding hole 215 can play a guiding role for the resilient member 40, so that the resilient member 40 is not easy to be skewed during retracting and stretching movement, so that the piston rod 21 moves more smoothly relative to the guiding rod 30.

If the third guiding hole 215 with a size being less than that of the first guiding hole 214 is not provided, the resilient member 40 will easily be skewed from side to side when the piston rod 21 moves relative to the guiding rod 30 and the e resilient member 40 stretches or contracts along with the movement of the piston rod 21, leading to the resilient member 40 being j ammed inside the first guiding hole 214, and the piston rod 21 not being able to continue to move relative to the guiding rod 30, thus affecting the normal operation of the check valve 100. In order to solve such problem, the third guiding hole 215 has an size slightly greater than an outer diameter of the resilient member 40, restricting the resilient member 40 from swinging side to side when it is being stretched or compressed, so as to improve the smoothness of the movement of the piston rod 21; furthermore, by providinf the third guiding hole 215, a limit step 216 is formed between the first guiding hole 214 and the third guiding hole 215, thereby enabling the guiding rod 30 abut against the limit step 216 when it moves in the first guiding hole 214, realizing a limiting effect on the guiding rod 30.

Optionally, in this embodiment, the resilient member 40 is selected as a spring. In other embodiments, the resilient member 40 may be selected as other components, which is not limited herein.

Furthermore, as shown in FIG. 5, a balance hole 32 is provided at one end of the guiding rod 30 away from the piston rod 21, one end of the balance hole 32 is in communication with the second guiding hole 31, and the other end of the balance hole 32 is in communication with the outlet 14, thus reducing the resistance to the piston rod 21, facilitating the movement of the piston rod 21 between the inlet 13 and the outlet 14, and further lowering the resistance of a fluid to improve the circulation capacity of the refrigerant in the valve cavity 11.

Specifically, a diameter of the guiding rod 30 is denoted as D, a length of the guiding rod 30 for effectively guiding the piston rod 21 to move is denoted as H, and the diameter D of the guiding rod 30 and the length H of the guiding rod 30 for effectively guiding the piston rod 21 to move satisfy the following relationship: 0.8 D ≤ H ≤ 3D. If the length H of the guiding rod 30 for effectively guiding the piston rod 21 to move is too short, the piston rod 21 will easily get stuck when moving under guiding by the guiding rod 30, thus affecting the normal operation of the check valve 100, and if the length H of the guiding rod 30 for effectively guiding the piston rod 21 to move is too long, it will increase the material cost. Thus a limiting of 0.8 D ≤ H ≤ 3D makes it possible to avoid obstruction of the refrigerant flow in the valve cavity 11 and improve the refrigerant flow performance under the premise of saving the material cost.

The first guiding hole 214 of the piston rod 21 is provided with a connecting hole (not shown) that extends radially and communicates the first guiding hole 214 with the outer side of the piston rod 21. The connecting hole is provided on a side of the first guiding hole 214 away from the guiding rod 30. The first guiding hole 214 can include at least one connecting hole. In some embodiments, the first guiding hole 214 includes a plurality of connecting holes arranged spaced with each other and along a circumference of the first guiding hole.

Furthermore, a locating member 50 is further fixedly arranged in the valve cavity 11 and arranged at the end of the guiding rod 30 away from the piston rod 21. A through hole 51 is formed in the locating member 50, the guiding rod 30 is inserted into the through hole 51 and fixedly connected with the locating member 50.

Specifically, the locating member 50 includes a stopper 52 and a circlip 53. The stopper 52 is fixed between the guiding rod 30 and the circlip 53, so that the stopper 52 does not have a space for movement in the axis of the valve body 10 after being restricted by the circlip 53.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present invention.

One of ordinary skill in the art should recognize that the above embodiments are used only to illustrate the present invention and are not used to limit the present invention, and that appropriate variations and improvements to the above embodiments fall within the protection scope of the present invention so long as they are made without departing from the substantial spirit of the present invention.

## Claims

1. A check valve comprising a valve body and a piston unit, wherein the valve body comprises a valve cavity and a valve port, the valve body is provided with an inlet and an outlet, the valve port is located between the inlet and the valve cavity, the outlet is in communication with the valve cavity, and the piston unit is capable of moving in the valve cavity along an axis of the valve body to open/close the valve port;
the valve cavity comprises a flaring portion, and along the axis of the valve body, a flow area of a cross section of the flaring portion is greater than a flow area of a cross section of the valve port.

2. The check valve of claim 1, wherein an inner wall of the flaring portion is in a conical shape, the flaring portion has a flaring port facing to the outlet, and a small diameter end of the flaring portion is in communication with the valve port.

3. The check valve of claim 1, further comprising a guiding rod, wherein the guiding rod is fixed in the valve cavity, the piston unit comprises a piston rod and a sealing member, one end of the piston rod is matched with the guiding rod, and the other end of the piston rod is arranged towards the valve port; the sealing member is installed on the end of the piston rod towards the valve port, and the piston rod is capable of moving along the axis of the valve body by the guiding rod so as to drive the sealing member to open/close the valve port.

4. The check valve of claim 1, wherein a flow area of a cross section of a portion of the valve cavity adjacent to the valve port and towards the outlet is greater than the flow area of the cross section of the valve port along the axis of the valve body.

5. The check valve of claim 3, wherein a diameter of the guiding rod is denoted as D, a length of the guiding rod for effectively guiding the piston rod to move is denoted as H, and the diameter D of the guiding rod and the length H of the guiding rod for effectively guiding the piston rod to move satisfy the following relationship: 0.8 D ≤ H ≤ 3D.

6. The check valve of claim 3, wherein a first stop portion and a second stop portion are provided on an end of the piston rod adjacent to the inlet, a groove is formed between the first stop portion and the second stop portion, and the groove is configured to accommodate the sealing member.

7. The check valve of claim 6, wherein a maximum outer diameter of the first stop portion is defined as D₁, a maximum outer diameter of the second stop portion is defined as D₂, a maximum outer diameter of the sealing member is defined as D₃, and the maximum outer diameter D₁ of the first stop portion, the maximum outer diameter D₂ of the second stop portion and the maximum outer diameter D₃ of the sealing member satisfy the following relationship: D₃ > D₂ > D₁.

8. The check valve of claim 6, wherein the first stop portion comprises a first peripheral wall portion, the flaring portion comprises a second peripheral wall portion, an included angle between an extension line of the first peripheral wall portion and the axis of the valve body is defined as α, an included angle between an extension line of the second peripheral wall portion and the axis of the valve body is defined as β, and the included angle α between the extension line of the first peripheral wall portion and the axis of the valve body and the included angle β between the extension line of the second peripheral wall portion and the axis of the valve body satisfy the following relationships: α > β, 0° < α < 90°, and 0° < β < 90°.

9. The check valve of claim 3, wherein a first guiding hole is formed in the end of the piston rod adjacent to the guiding rod, a second guiding hole is formed in an end of the guiding rod adjacent to the piston rod, the first guiding hole is in communication with the second guiding hole, the check valve further comprises a resilient member, two ends of the resilient member are connected with the piston rod and the guiding rod respectively, and the resilient member is located in the first guiding hole and the second guiding hole at the same time;
a diameter of the first guiding hole is defined as X, a diameter of the second guiding hole is defined as Y, a diameter of the resilient member is defined as Z, and the diameter X of the first guiding hole, the diameter Y of the second guiding hole, and the diameter Z of the resilient member satisfy the following relationships: X > Y > Z.

10. The check valve of claim 9, wherein an end of the guiding rod away from the piston rod is provided with a balance hole, one end of the balance hole is in communication with the second guiding hole, and the other end of the balance hole is in communication with the outlet.

11. The check valve of claim 9, wherein the piston rod is further provided with a third guiding hole, the third guiding hole is in communication with the first guiding hole, and the third guiding hole is located at an end of the first guiding hole away from the guiding rod;
a size of the third guiding hole is defined as W, and the diameter X of the first guiding hole, the diameter Z of the resilient member, and the size W of the third guiding hole satisfy the following relationship: Z < W < X.

12. The check valve of claim 3, wherein a locating member is further fixedly arranged in the valve cavity and arranged at the end of the guiding rod away from the piston rod, a through hole is formed in the locating member, the guiding rod is inserted into the through hole and fixedly connected with the locating member, and along the axis of the valve body, a flow area of a cross section of the locating member is greater than or equal to the flow area of the cross section of the valve port.

13. The check valve of claim 12, wherein the locating member comprises a stopper and a circlip, and the stopper is fixed between the guiding rod and the circlip.
